# FASCICULE DE BREVET EUROPEEN

(11) **EP 2 371 712 B1**
(45) Date de publication et mention de la délivrance du brevet: **11.05.2016**
(21) Numéro de dépôt: 11001485.9
(22) Date de dépôt: 23.02.2011
(51) Int. Cl.: B64C 27/51, F16F 1/38

(54) **Amortisseur d'une pale, et rotor muni d'un tel amortisseur**
Schwingungsdämpfer eines Schaufelblatts, und mit einem solchen Schwingungsdämpfer ausgestatteter Rotor
Shock absorber of a blade and rotor provided with such a shock absorber

(30) Priorité: 29.03.2010 FR 1001252
(43) Date de publication de la demande: 05.10.2011
(73) Titulaire: Airbus Helicopters, 13725 Marignane Cedex (FR)
(72) Inventeur: Louis, Charles, 13090 Aix En Provence (FR); Ferrant, Matthieu, 13090 Aix En Provence (FR)
(74) Mandataire: GPI & Associés

(56) Documents cités:
- EP-A1- 1 767 452
- WO-A1-94/15113
- FR-A1- 2 839 945
- FR-A1- 2 929 675

## Description

La présente invention concerne un amortisseur d'une pale, et un rotor muni d'un tel amortisseur.

Plus particulièrement, l'invention se trouve dans le domaine technique de l'amortissement des mouvements de traînée d'une pale, une pale de la voilure tournante d'un giravion par exemple.

En effet, un rotor de giravion comporte classiquement un moyeu entraîné en rotation selon un axe de rotation par un arbre de sortie d'une boite de transmission de puissance, ainsi qu'au moins trois pales fixées au moyeu par l'intermédiaire d'articulations appropriées, en particulier par l'intermédiaire d'une butée sphérique lamifiée dédiée à chaque pale.

Les oscillations de chaque pale autour de son axe de traînée peuvent se coupler de façon instable avec les mouvements ou les modes de déformation élastiques de la cellule, en particulier les oscillations de l'hélicoptère posé au sol sur ses atterrisseurs : c'est l'origine du phénomène, désigné « résonance sol », qui peut être dangereux pour l'appareil lorsque la fréquence propre des oscillations des pales autour de leur axe de traînée est voisine de l'une des fréquences propres des oscillations de l'appareil autour de ses atterrisseurs.

On note qu'il existe aussi dans le domaine des giravions des phénomènes de résonance connus sous les noms de « résonance air » et de « résonance de chaîne cinématique ».

Les remèdes aux phénomènes de résonance dûs aux mouvements des pales d'un rotor de giravions consistent à introduire un amortissement des mouvements de ces pales par rapport à leurs axes de traînée par un dispositif du type amortisseur.

Ces amortisseurs comprennent des moyens de rappel élastique à raideur et amortissement déterminés, pour s'opposer aux phénomènes de résonance, en particulier de résonance sol et aussi de résonance de chaîne cinématique qui peuvent apparaître notamment sur les hélicoptères.

En effet, lors d'une excitation des mouvements en traînée des pales d'un rotor, les pales sont écartées de leur position d'équilibre et peuvent se répartir inégalement en direction circonférentielle, et créer un balourd par déplacement du centre de gravité du rotor hors de l'axe de rotation de ce dernier. De plus, les pales écartées de leur position d'équilibre oscillent autour de cette position à une fréquence *ω_{δ}*, qui est la fréquence propre des pales en traînée, appelée également premier mode de traînée ou mode propre de traînée.

Si Ω est la fréquence de rotation du rotor, il est connu que le fuselage de l'hélicoptère est ainsi excité aux fréquences|Ω±*ω_{δ}*|.

Posé sur le sol par son train d'atterrissage, le fuselage de l'hélicoptère constitue un système à masse suspendue au dessus du sol par un ressort et un amortisseur au niveau de chaque atterrisseur. Le fuselage reposant sur son train d'atterrissage est donc principalement caractérisé par ses des modes propres de vibration en roulis et en tangage. Il y a risque d'instabilité au sol lorsque la fréquence d'excitation du fuselage sur son train d'atterrissage est voisine de la fréquence propre d'oscillation |Ω+*ω_{δ}*| ou |Ω-*ω_{δ}*| ce qui correspond au phénomène dénommé résonance sol. Pour éviter l'instabilité, il est connu de rechercher d'abord à éviter le croisement de ces fréquences, et, si ce croisement ne peut être évité, il faut amortir suffisamment le fuselage sur son train d'atterrissage ainsi que les pales du rotor principal dans leurs mouvements de traînée.

En conséquence, la raideur des amortisseurs de traînée des pales d'un rotor principal doit être choisie pour que la fréquence propre des pales en traînée soit hors d'une zone de résonance sol possible, tout en disposant simultanément d'un amortissement suffisant, car, lors du passage du régime de rotation du rotor au régime critique relatif au croissement de fréquences, lors de la montée comme lors de la descente en régime, les mouvements des pales doivent être suffisamment amortis pour éviter une entrée en résonance.

Pour cette raison, les amortisseurs de traînée à moyens de rappel élastique de raideur déterminée sont également dénommés adaptateurs de fréquence.

De façon générale, la raideur de l'amortisseur assigné à une pale introduit une raideur angulaire équivalente, s'opposant aux débattements angulaires de la pale par rapport au moyeu autour de son axe de traînée. On peut ainsi augmenter la fréquence du mode propre des pales en traînée pour éloigner cette fréquence des deux phénomènes de résonance précités.

La raideur angulaire équivalente est proportionnelle au carré du bras de levier entre l'amortisseur et l'axe de traînée de la pale, c'est-à-dire la distance séparant l'axe de traînée de l'axe passant par les centres des deux rotules d'articulation de l'amortisseur, ces rotules étant nécessaires pour cette application.

Le document FR2653405 présente deux implantations différentes de ces amortisseurs.

Ainsi, selon ce document, le moyeu d'un rotor comporte une partie centrale annulaire, une partie intermédiaire munie d'une cavité par pale, puis d'une partie périphérique.

Chaque pale est alors solidarisée par son pied à un manchon fixé sur une butée sphérique lamifiée agencée dans l'une desdites cavités.

De plus, selon un premier mode de réalisation, un amortisseur rotatif par pale est solidarisé à la partie périphérique du moyeu. L'amortisseur rotatif est alors un organe de rappel avec amortissement incorporé par cisaillement d'un matériau viscoélastique à grande rémanence aux déformations entre une armature fixe et une armature mobile.

On note que le document FR2592449 présente un amortisseur rotatif muni d'un organe de rappel mettant en oeuvre un fluide.

Afin de pouvoir amortir le mouvement de traînée d'une pale, cet amortisseur rotatif est relié par une bielle à un manchon de pale.

Ce premier mode de réalisation convient aux giravions munis d'un rotor comportant trois pales.

En effet, le bras de levier de ce dispositif étant relativement faible, il convient de mettre en oeuvre un amortisseur rotatif surdimensionné et donc encombrant ce qui limite la possibilité d'un nombre excessif de pales.

Ainsi, pour les giravions munis d'un rotor comportant au moins quatre pales, le document FR2653405 propose un second mode de réalisation.

Conformément à ce second mode de réalisation, un amortisseur rotatif est fixé à l'intérieur de chaque manchon, l'amortisseur rotatif d'une pale étant relié à une pale adjacente par une bielle.

Par rapport à une implantation plus classique où les amortisseurs sont interposés entre chaque pale et le moyeu du rotor, l'implantation interpale d'un amortisseur permet d'augmenter les bras de levier entre les amortisseurs et les axes de traînée des pales, mais aussi de faire participer deux amortisseurs par pale pour éviter la résonance sol. La raideur de chaque amortisseur peut être limitée en conséquence, et un avantage qui en découle est un plus faible niveau d'effort statique introduit par le montage de chaque amortisseur en adaptateur interpale. Cette implantation est donc très favorable pour combattre la résonance sol.

Par contre, le montage interpale ne permet pas l'amortissement des mouvements de traînée globaux et nécessite des butées de traînée pour éviter des endommagements au démarrage et surtout au freinage du rotor. Par ailleurs, des précautions particulières peuvent être à considérer pour éviter la mise en résonance de la chaîne cinématique

Par conséquent, l'art antérieur prévoit deux modes de réalisation distincts et alternatifs à savoir :
- un premier agencement d'un amortisseur rotatif entre le moyeu et un manchon, ou
- un deuxième agencement d'un amortisseur rotatif entre deux pales.

Chaque mode de réalisation présente alors ses propres avantages et inconvénients.

Le premier agencement est efficace pour lutter notamment contre la résonance de la chaîne cinématique. Toutefois, il met en oeuvre un unique amortisseur par pale. Un défaut ou une rupture d'un amortisseur peut alors être pénalisant.

Le deuxième agencement comprend de fait deux amortisseurs par pale, ce qui augmente sa sécurité. Par contre, le mouvement collectif de traînée des pales se produit sans raideur et sans amortissement ce qui peut induire un problème de résonance de la chaîne cinématique.

En fonction des besoins, on choisit alors soit le premier agencement soit le deuxième agencement.

L'état de la technique inclut de plus les documents EP 1 767 452, WO 94/15113, FR 2 929 675, US 4 580 945.

En outre, on connaît le document FR 2 839 945, qui est considéré comme l'art antérieur le plus proche et décrit les caractéristiques du préambule de la revendication 1.

L'invention a **alors** pour objet un amortisseur permettant une implémentation sécurisée et apte à éviter l'apparition d'une résonance de chaîne cinématique, notamment.

Selon l'invention telle que décrite par les caractéristiques de la revendication 1, un amortisseur est muni d'une armature extrémale interne et d'une armature extrémale externe coaxiales, un organe de rappel étant agencé entre l'armature extrémale interne et l'armature extrémale externe.

Cet amortisseur est remarquable en ce que l'organe de rappel comporte une armature intermédiaire coaxiale à l'armature extrémale interne et à l'armature extrémale externe, l'organe de rappel ayant un premier moyen de rappel et un deuxième moyen de rappel, le premier moyen de rappel étant agencé entre l'armature extrémale externe et l'armature intermédiaire, le deuxième moyen de rappel étant agencé entre l'armature extrémale interne et l'armature intermédiaire,une armature extrémale étant solidaire d'un premier moyen de liaison, ladite armature intermédiaire étant solidaire d'un deuxième moyen de liaison, une autre armature extrémale étant solidaire d'un troisième moyen de liaison.

Ainsi, une armature peut être liée à une première pale, une autre armature peut être liée à une deuxième pale et la dernière armature peut être liée au moyeu. Ainsi, l'amortisseur est à même d'effectuer un amortissement et d'apporter une raideur d'une part entre deux pales et d'autre part entre une pale et le moyeu d'un rotor.

De plus, un premier moyen de rappel peut apporter plus de raideur et moins d'amortissement tandis que le deuxième moyen de rappel peut apporter moins de raideur et plus d'amortissement, et ce quelque soit les organes reliés aux différentes armatures.

De façon surprenante, cet amortisseur présente les avantages des premier et deuxième agencements précités.

On note que chaque moyen de rappel peut être du type viscoélastique, en présentant un ou plusieurs blocs en élastomère par exemple, ou encore du type moyen de rappel à fluide tel que présenté dans le document FR2592449.

De plus, un moyen de rappel peut être sollicité par une rotation relative entre deux armatures adjacentes, ou encore par une translation relative entre deux armatures adjacentes.

Selon d'autres aspects, l'invention peut comprendre d'autres caractéristiques.

Par exemple, une armature extrémale est solidaire d'un premier moyen de liaison, l'armature intermédiaire étant solidaire d'un deuxième moyen de liaison. Le premier moyen de liaison et le deuxième moyen de liaison permettent de mouvoir les armatures associées par rapport à une armature fixe de l'amortisseur.

En outre, l'armature extrémale externe entoure au moins partiellement le premier moyen de rappel et l'armature intermédiaire.

De même, l'armature intermédiaire peut entourer au moins partiellement le deuxième moyen de rappel et ladite armature extrémale interne.

Selon un autre aspect, le premier moyen de rappel ayant des premières caractéristiques de raideur et d'amortissement, le deuxième moyen de rappel ayant des deuxièmes caractéristiques de raideur et d'amortissement, les premières caractéristiques diffèrent des deuxièmes caractéristiques. Ainsi, on adapte les caractéristiques des moyens de rappel en fonction de l'armature associée et de sa destination.

Outre un amortisseur, l'invention vise un rotor muni d'un moyeu et d'une pluralité de pales, chaque pale comportant une surface sustentatrice et un manchon de liaison au moyeu. Il est à noter que le manchon peut être intégré à la surface sustentatrice.

Ce rotor est notamment remarquable en ce qu'il comporte au moins un amortisseur selon l'invention, voire un amortisseur par pale, chaque amortisseur étant muni d'une armature extrémale interne et d'une armature extrémale externe coaxiales, un organe de rappel étant agencé entre l'armature extrémale interne et l'armature extrémale externe, l'organe de rappel comportant une armature intermédiaire coaxiale à l'armature extrémale interne et à l'armature extrémale externe, l'organe de rappel ayant un premier moyen de rappel et un deuxième moyen de rappel, le premier moyen de rappel étant agencé entre l'armature extrémale externe et l'armature intermédiaire, le deuxième moyen de rappel étant agencé entre l'armature extrémale interne et l'armature intermédiaire, une desdites armatures extrémale interne, extrémale externe et intermédiaire étant liée au moyeu, une autre desdites armatures extrémale interne, extrémale externe et intermédiaire étant liée à une première pale, une autre desdites armatures extrémale interne, extrémale externe et intermédiaire étant liée à une deuxième pale adjacente à ladite première pale.

Le moyen de rappel sollicité par une armature reliée au moyeu et à une pale donnée apporte alors de la raideur à ladite pale donnée, alors que le moyen de rappel agencé entre deux armatures reliées à deux pales adjacentes apporte de l'amortissement.

Le rotor peut comporter d'autres caractéristiques.

Selon un premier mode de réalisation, l'amortisseur est solidarisé au moyeu puis relié à une première pale et à une deuxième pale.

Selon une première variante préférée de ce premier mode de réalisation, une armature extrémale d'un amortisseur étant solidarisée au moyeu, l'autre armature extrémale est liée à une première pale, par exemple à son premier manchon, l'armature intermédiaire étant liée à une deuxième pale adjacente à la première pale, par exemple au deuxième manchon de la deuxième pale. L'amortisseur est alors fixé au moyeu entre les première et deuxième pales.

On solidarise donc l'amortisseur au moyeu par une armature extrémale, l'autre armature extrémale et l'armature intermédiaire étant déplacées respectivement par la première pale et la deuxième pale par rapport à l'armature extrémale fixe solidarisée au moyeu.

Eventuellement, l'armature extrémale externe d'un amortisseur est solidarisée au moyeu, l'armature extrémale interne étant liée à la première pale.

Selon une deuxième variante de ce premier mode de réalisation, une armature extrémale d'un amortisseur étant solidarisée à une première pale, l'autre armature extrémale est liée à une deuxième pale adjacente à la première pale, l'armature intermédiaire étant liée au moyeu.

Ainsi, l'amortisseur est toujours fixé au moyeu. Cependant, l'armature fixe solidarisée au moyeu est constituée par l'armature intermédiaire et non plus par une armature extrémale contrairement à la première variante du premier mode de réalisation.

Selon un deuxième mode de réalisation, l'amortisseur est solidarisé à une première pale puis relié au moyeu et à une deuxième pale.

Selon une première variante du deuxième mode de réalisation, une armature extrémale d'un amortisseur est solidarisée à une première pale, l'autre armature extrémale étant liée au moyeu, l'armature intermédiaire étant liée à une deuxième pale adjacente à la première pale.

On solidarise donc l'amortisseur à la première pale par une armature extrémale, l'autre armature extrémale et l'armature intermédiaire étant aptes à être déplacées par rapport à l'armature extrémale fixe solidarisée à la première pale.

Selon une deuxième variante du deuxième mode de réalisation, une armature extrémale d'un amortisseur rotatif étant solidarisée à une première pale, l'autre armature extrémale est liée à une deuxième pale adjacente à la première pale, l'armature intermédiaire étant liée au moyeu.

Enfin, selon une troisième variante du deuxième mode de réalisation, une armature intermédiaire d'un amortisseur étant solidarisée à une première pale, une armature extrémale est liée au moyeu, l'autre armature extrémale étant liée à une deuxième pale adjacente à la première pale.

La présente invention a aussi pour objet le procédé de fabrication du dispositif précité.

L'invention et ses avantages apparaîtront avec plus de détails dans le cadre de la description qui suit avec des exemples de réalisation donnés à titre illustratif en référence aux figures annexées qui représentent :
- la figure 1, un amortisseur selon l'invention dont les moyens de rappel sont sollicités par un mouvement relatif rotatif,
- la figure 2, un amortisseur selon l'invention dont les moyens de rappel sont sollicités par un mouvement relatif translatif,
- la figure 3, un schéma explicitant la première variante du premier mode de réalisation d'un rotor ayant des amortisseurs sollicités par un mouvement relatif rotatif, liés au moyeu par leurs armatures extrémales externes,
- la figure 4, un schéma explicitant la première variante du premier mode de réalisation d'un rotor ayant des amortisseurs sollicités par un mouvement translatif, liés au moyeu par leurs armatures extrémales externes,
- la figure 5, un schéma explicitant la deuxième variante du premier mode de réalisation d'un rotor ayant des amortisseurs sollicités par un mouvement relatif rotatif, liés au moyeu par leurs armatures extrémales externes,
- la figure 6, un schéma explicitant la troisième variante du premier mode de réalisation d'un rotor,
- la figure 7, un schéma explicitant la première variante du deuxième mode de réalisation d'un rotor,
- la figure 8, un schéma explicitant la deuxième variante du deuxième mode de réalisation d'un rotor, et
- la figure 9, un schéma explicitant la troisième variante du deuxième mode de réalisation d'un rotor.

Les éléments présents dans plusieurs figures distinctes sont affectés d'une seule et même référence.

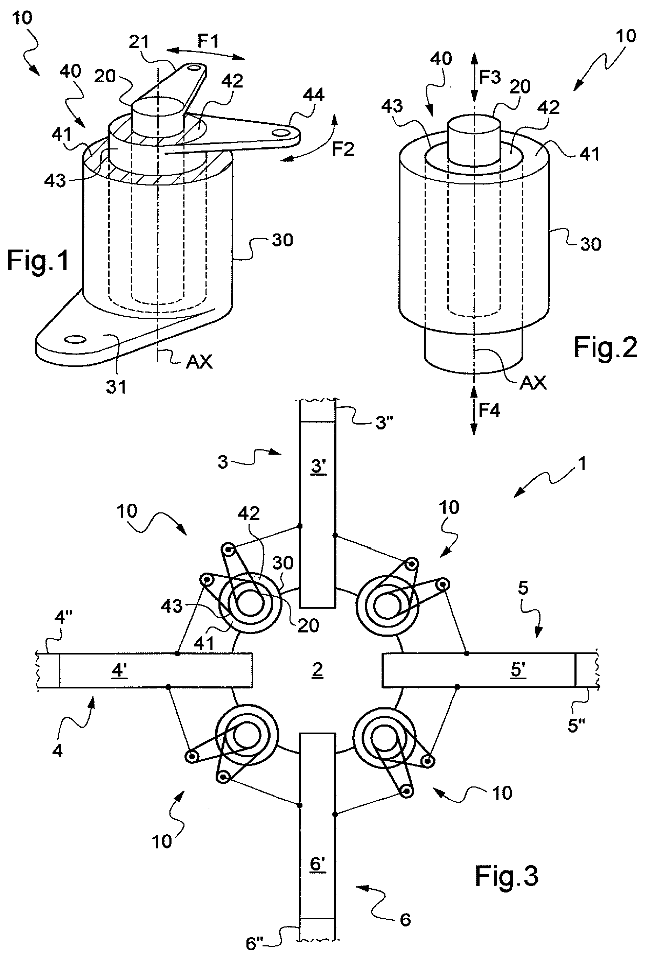

La figure 1 présente un amortisseur 10 selon l'invention.

Cet amortisseur 10 comporte une armature extrémale interne 20, une armature tubulaire par exemple s'étendant le long d'un axe AX de symétrie. De plus, l'amortisseur 10 comprend une armature extrémale externe 30, également de forme tubulaire par exemple et s'étendant selon l'axe AX. Dès lors, l'armature extrémale interne 20 et l'armature extrémale externe 30 sont coaxiales.

En outre, l'armature extrémale externe 30 entoure au moins partiellement l'armature extrémale interne 20, un organe de rappel 40 étant agencé entre cette armature extrémale externe 30 et cette armature extrémale interne 20.

L'organe de rappel 40 comprend alors un premier moyen de rappel 41, un deuxième moyen de rappel 42 et une armature intermédiaire 43 insérée entre l'armature extrémale externe 30 et l'armature extrémale interne 20. Dès lors, le premier moyen de rappel 41 est agencé entre l'armature extrémale externe 30 et l'armature intermédiaire 43, le deuxième moyen de rappel 42 étant agencé entre l'armature extrémale interne 20 et l'armature intermédiaire 43. On comprend donc que l'armature extrémale externe 30 entoure au moins partiellement l'armature intermédiaire 43, cette armature intermédiaire 43 entourant au moins partiellement l'armature extrémale interne 20.

Chaque armature est ainsi à apte à effectuer un déplacement relativement à une autre armature en sollicitant le premier moyen de rappel et/ou le deuxième moyen de rappel.

Chaque moyen de rappel peut comporter un ou plusieurs blocs en élastomère par exemple, l'agencement de ce moyen de rappel mettant en oeuvre des techniques usuelles.

A titre de variante, un moyen de rappel peut mettre en oeuvre un fluide coopérant avec des palettes des armatures associées, conformément à l'enseignement du document Fr 2592449 par exemple.

Par ailleurs, un premier moyen de rappel 41 ayant des premières caractéristiques de raideur et d'amortissement, le deuxième moyen de rappel 42 ayant des deuxièmes caractéristiques de raideur et d'amortissement, les premières caractéristiques diffèrent des deuxièmes caractéristiques pour être adaptées au besoin.

L'amortisseur 10 comprend donc trois armatures distinctes à savoir une armature extrémale interne 20, une armature intermédiaire 43 et une armature extrémale externe 30, deux armatures distinctes et adjacentes étant séparées par un moyen de rappel.

L'amortisseur peut alors comprendre des moyens de liaison afin que chaque moyen de rappel soit sollicité par le déplacement relatif des armatures coopérant avec ce moyen de rappel sollicités par un élément extérieur. Par exemple, deux armatures sont pourvues d'un moyen de liaison, la dernière armature étant maintenue dans une position fixe par un moyen de liaison de type moyen de maintien en position.

Ainsi, une armature extrémale peut être solidaire d'un premier moyen de liaison, l'armature intermédiaire étant solidaire d'un deuxième moyen de liaison, l'autre armature extrémale étant solidaire d'un troisième moyen de liaison

En référence à la figure 1, selon une réalisation préférée, l'armature extrémale interne 20 est solidaire d'un premier moyen de liaison 21 apte à être articulé à une première bielle, l'armature intermédiaire 43 étant solidaire d'un deuxième moyen de liaison 44. L'armature extrémale externe 30 est alors munie d'un troisième moyen de liaison 31.

Les moyens de liaison représentés sur la figure 1 sont de type plaque de liaison. Toutefois, il est concevable d'utiliser un moyen de collage, un moyen de soudure, un moyen de vissage par exemple ou toute autre méthode. Par exemple, le troisième moyen de liaison peut être de la colle ou un cordon de soudure.

Conformément à la figure 1, l'amortisseur 10 peut être utilisé en tant qu'amortisseur rotatif.

Une rotation du premier moyen de liaison 21 autour de l'axe AX selon la double flèche F1 entraîne une rotation identique de l'armature extrémale interne 20. Le deuxième moyen de rappel 42 est alors sollicité par le biais de sollicitations en cisaillement.

De même, une rotation du deuxième moyen de liaison 44 autour de l'axe AX selon la double flèche F2 entraîne une rotation identique de l'armature intermédiaire 43. Le premier moyen de rappel 41 et le deuxième moyen de rappel 42 sont alors sollicités par le biais de sollicitations en de cisaillement.

Conformément à la figure 2, l'amortisseur 10 peut être utilisé en tant qu'amortisseur linéaire.

Une translation du premier moyen de liaison 21 le long de l'axe AX selon la double flèche F3 entraîne une translation identique de l'armature extrémale interne 20. Le deuxième moyen de rappel 42 est alors sollicité par le biais de sollicitations en cisaillement.

De même, une translation du deuxième moyen de liaison 44 le long de l'axe AX selon la double flèche F4 entraîne une translation identique de l'armature intermédiaire 43. Le premier moyen de rappel 41 et le deuxième moyen de rappel 42 sont alors sollicités par le biais de sollicitations en cisaillement.

Outre un amortisseur 10, l'invention concerne un rotor muni dudit amortisseur.

La figure 3 présente un rotor 1 muni d'un moyeu 2 tournant, le rotor 1 ayant une pluralité de pales 3, 4, 5, 6 articulées chacune au moyeu 2.

Classiquement, chaque pale 3, 4, 5, 6 comporte une surface sustentatrice 3", 4", 5", 6" et un manchon 3', 4', 5', 6' de liaison au moyeu 2, chaque manchon 3', 4', 5', 6' pouvant être intégré à la surface sustentatrice 3", 4", 5", 6".

De plus, le rotor 1 comporte au moins un amortisseur 10 selon l'invention, par exemple un amortisseur 10 par pale 3, 4, 5, 6.

Selon le premier mode de réalisation présenté sur les figures 3 à 6, un amortisseur 10 est solidarisé au moyeu 2 par l'une de ses armatures puis est relié à deux pales adjacentes par ses deux autres armatures.

Selon la première variante du premier mode de réalisation représentée sur les figures 3 à 5, une armature extrémale d'un amortisseur 10 est solidarisée au moyeu 2, l'autre armature extrémale étant liée à une première pale 3, l'armature intermédiaire étant liée à une deuxième pale 4 adjacente à la première pale 3.

Conformément à l'alternative de la figure 3, l'armature extrémale externe 30 d'un amortisseur 10 est solidarisée au moyeu 2 par un troisième moyen de liaison, à savoir par collage, soudure, vissage d'une plaque de liaison par exemple ou toute autre méthode. Dès lors, l'armature extrémale interne 20 est liée par son premier moyen de liaison 21 au premier manchon 3' de la première pale 3 alors que l'armature intermédiaire 43 est liée par son deuxième moyen de liaison 44 au deuxième manchon 4' de la deuxième pale 4, une première bielle articulée assurant la liaison entre le premier moyen de liaison 21 et le premier manchon 3' et une deuxième bielle articulée assurant la liaison entre le deuxième moyen de liaison 44 et le deuxième manchon 4'.

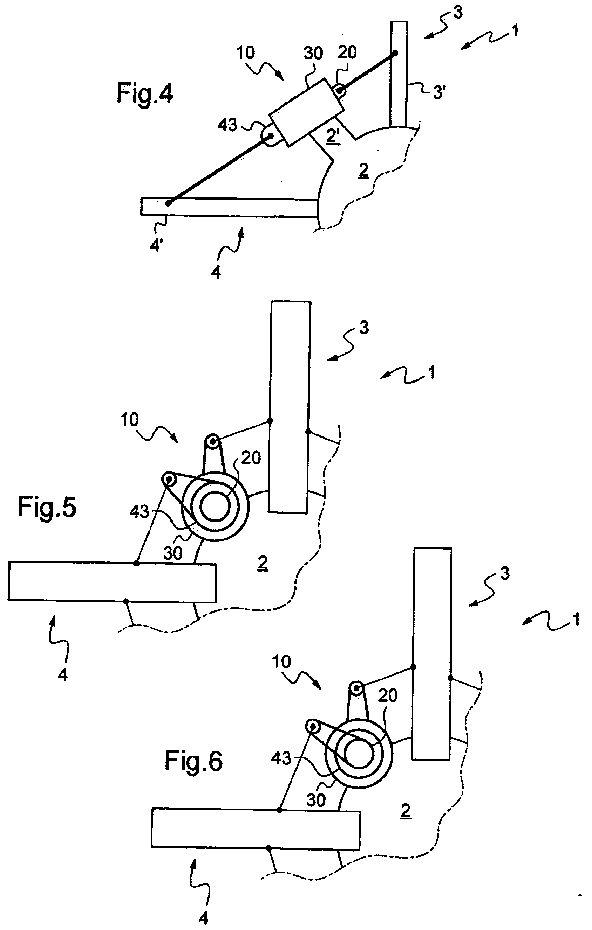

Cet amortisseur 10 peut être un amortisseur de type rotatif conformément à la figure 3 ou de type translatif conformément à la figure 4 où l'armature extrémale externe est solidarisée à un bras de maintien 2' du moyeu 2.

En référence à la deuxième variante de la figure 5, l'armature extrémale interne 20 d'un amortisseur 10 est liée voire solidarisée au moyeu 2 par un troisième moyen de liaison usuel. Dès lors, l'armature extrémale externe 30 est liée par son moyen de liaison et une bielle articulée au premier manchon 3' de la première pale 3 alors que l'armature intermédiaire 43 est liée par son moyen de liaison et une bielle articulée au deuxième manchon 4' de la deuxième pale 4.

Selon la troisième variante du premier mode de réalisation représentée sur la figure 6, l'armature intermédiaire 43 d'un amortisseur 10 est liée voire solidarisée au moyeu 2, l'armature extrémale externe 30 étant liée à une première pale 3, l'armature extrémale interne 20 étant liée à une deuxième pale 4 adjacente à la première pale 3.

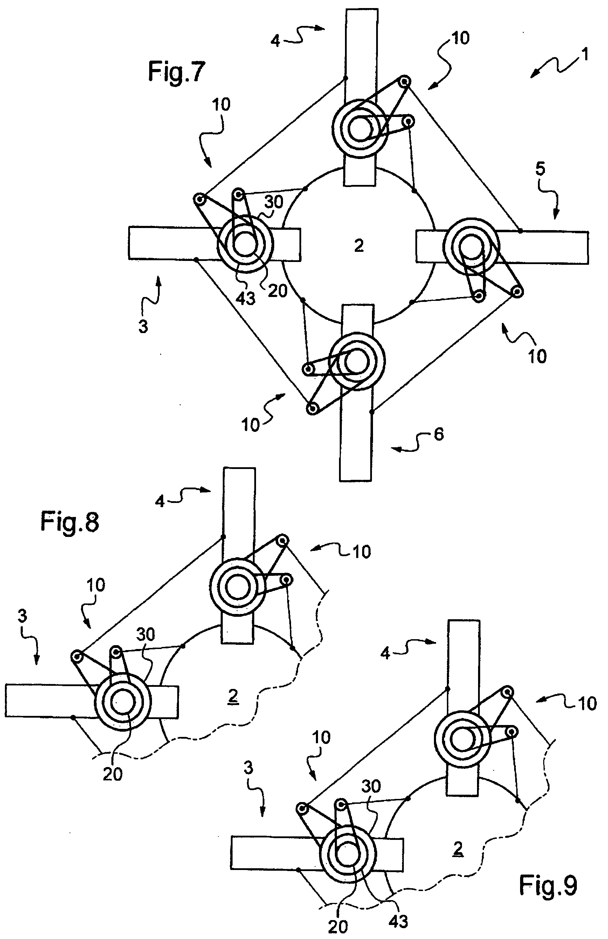

Selon le deuxième mode de réalisation présenté sur les figures 7 à 9, un amortisseur 10 est lié voire solidarisé à une pale par l'une de ses armatures puis relié à une pale adjacente et au moyeu par ses deux autres armatures.

Selon la première variante du deuxième mode de réalisation de la figure 7, une armature extrémale d'un amortisseur est liée voire solidarisée à une première pale 3, l'autre armature extrémale étant liée au moyeu 2, l'armature intermédiaire 43 étant liée à une deuxième pale 4 adjacente à ladite première pale 3.

Par exemple, un amortisseur 10 est solidarisé à une première pale 3 par son armature extrémale externe 30, via des moyens usuels. Par suite, l'armature extrémale interne 20 est reliée au moyeu 2 via un moyen de liaison articulé à une bielle par exemple, l'armature interne 43 étant reliée à une deuxième pale 4 adjacente à la première pale 3 via un moyen de liaison articulé à une bielle par exemple.

Selon la deuxième variante du deuxième mode de réalisation de la figure 8, une armature extrémale d'un amortisseur est liée voire solidarisée à une première pale, l'autre armature extrémale étant liée à une deuxième pale adjacente à ladite première pale et l'armature intermédiaire étant liée au moyeu.

Par exemple, un amortisseur 10 est solidarisé à une première pale 3 par son armature extrémale interne 20, via des moyens usuels. Par suite, l'armature extrémale externe 30 est reliée à une deuxième pale 4 adjacente à la première pale 3 via un moyen de liaison articulé à une bielle par exemple, l'armature intermédiaire 43 étant reliée au moyeu 2 via un moyen de liaison articulé à une bielle par exemple.

Selon la troisième variante du deuxième mode de réalisation de la figure 9, une armature intermédiaire 43 d'un amortisseur 10 est liée voire solidarisée à une première pale 3, une armature extrémale étant liée au moyeu 2 et l'autre armature extrémale étant liée à une deuxième pale 4 adjacente à ladite première pale 3.

Par exemple, un amortisseur 10 est solidarisé à une première pale 3 par son armature intermédiaire 43, via des moyens usuels. Par suite, l'armature extrémale externe 30 est reliée à une deuxième pale 4 via un moyen de liaison articulé à une bielle par exemple, l'armature extrémale interne 20 étant reliée au moyeu 2 via un moyen de liaison articulé à une bielle par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Amortisseur (10) pour une pale de la voilure tournante d'un giravion muni d'une armature extrémale interne (20) et d'une armature extrémale externe (30) tubulaires et coaxiales, un organe de rappel (40) étant agencé entre l'armature extrémale interne (20) et l'armature extrémale externe (30), **caractérisé en ce que** ledit organe de rappel (40) comporte une armature intermédiaire (43) coaxiale à l'armature extrémale interne (20) et à l'armature extrémale externe (30), ledit organe de rappel (40) ayant un premier moyen de rappel (41) et un deuxième moyen de rappel (42), ledit premier moyen de rappel (41) étant agencé entre l'armature extrémale externe (30) et ladite armature intermédiaire (43), ledit deuxième moyen de rappel (42) étant agencé entre l'armature extrémale interne (20) et ladite armature intermédiaire (43), une armature extrémale étant solidaire d'un premier moyen de liaison, ladite armature intermédiaire étant solidaire d'un deuxième moyen de liaison, une autre armature extrémale étant solidaire d'un troisième moyen de liaison.

2. Amortisseur selon la revendication 1,
**caractérisé en ce que** l'armature extrémale externe (30) entoure au moins partiellement ledit premier moyen de rappel (41) et ladite armature intermédiaire (43).

3. Amortisseur selon l'une quelconque des revendications 1 à 2,
**caractérisé en ce que** l'armature intermédiaire (43) entoure au moins partiellement ledit deuxième moyen de rappel (42) et ladite armature extrémale interne (20).

4. Amortisseur selon l'une quelconque des revendications 1 à 3,
**caractérisé en ce que** le premier moyen de rappel (41) ayant des premières caractéristiques de raideur et d'amortissement, le deuxième moyen de rappel (42) ayant des deuxièmes caractéristiques de raideur et d'amortissement, les premières caractéristiques diffèrent des deuxièmes caractéristiques.

5. Rotor (1) muni d'un moyeu (2) et d'une pluralité de pales (3, 4, 5, 6),
**caractérisé en ce qu'**il comporte au moins un amortisseur (10) selon l'une quelconque des revendications précédentes, chaque amortisseur (10) étant muni d'une armature extrémale interne (20) et d'une armature extrémale externe (30) tubulaires et coaxiales, un organe de rappel (40) étant agencé entre l'armature extrémale interne (20) et l'armature extrémale externe (30), ledit organe de rappel (40) comportant une armature intermédiaire (43) coaxiale à l'armature extrémale interne (20) et à l'armature extrémale externe (30), ledit organe de rappel (40) ayant un premier moyen de rappel (41) et un deuxième moyen de rappel (42), ledit premier moyen de rappel (41) étant agencé entre l'armature extrémale externe (30) et ladite armature intermédiaire (43), ledit deuxième moyen de rappel (42) étant agencé entre l'armature extrémale interne (20) et ladite armature intermédiaire (43), une desdites armatures extrémale interne, extrémale externe et intermédiaire étant liée au moyeu, une autre desdites armatures extrémale interne, extrémale externe et intermédiaire étant liée à une première pale, une autre desdites armatures extrémale interne, extrémale externe et intermédiaire étant liée à une deuxième pale adjacente à ladite première pale.

6. Rotor selon la revendication 5,
**caractérisé en ce qu'**une armature extrémale (20, 30) d'un amortisseur (10) étant solidarisée audit moyeu (2) l'autre armature extrémale (30, 20) est liée à une première pale (3), l'armature intermédiaire (43) étant liée à une deuxième pale (4) adjacente à ladite première pale (3).

7. Rotor selon la revendication 6,
**caractérisé en ce que** ladite armature extrémale externe (30) d'un amortisseur est solidarisée audit moyeu (2), l'armature extrémale interne (20) étant liée à ladite première pale (3).

8. Rotor selon la revendication 5,
**caractérisé en ce qu'**une armature extrémale (20, 30) d'un amortisseur étant solidarisée à une première pale (3) l'autre armature extrémale est liée à une deuxième pale (4) adjacente à ladite première pale (3), l'armature intermédiaire (43) étant liée audit moyeu (2).

9. Rotor selon la revendication 5,
**caractérisé en ce qu'**une armature extrémale (30) d'un amortisseur étant solidarisée à une première pale (3), l'autre armature extrémale (20) est liée audit moyeu (2), l'armature intermédiaire (43) étant liée à une deuxième pale (4) adjacente à ladite première pale (3).

10. Rotor selon la revendication 5,
**caractérisé en ce qu'**une armature extrémale (20) d'un amortisseur (10) étant solidarisée à une première pale (3), l'autre armature extrémale (30) est liée à une deuxième pale (4) adjacente à ladite première pale (3), l'armature intermédiaire (43) étant liée audit moyeu (2).

11. Rotor selon la revendication 5,
**caractérisé en ce qu'**une armature intermédiaire (43) d'un amortisseur (10) étant solidarisée à une première pale (3), une armature extrémale (20) est liée audit moyeu (2), l'autre armature extrémale (30) étant liée à une deuxième pale (4) adjacente à ladite première pale (3).

## Patentansprüche

1. Dämpfer (10) für ein Rotorblatt des Drehflügels eines Drehflügelflugzeugs mit einem inneren Endanker (20) und einem äußeren Endanker (30), die rohrförmig und koaxial zueinander sind, wobei ein Rückstellelement (40) zwischen dem inneren Endanker (20) und dem äußeren Endanker (30) angeordnet ist,
**dadurch gekennzeichnet, dass** das Rückstellelement (40) einen Zwischenanker (43) aufweist, der koaxial zu dem inneren Endanker (20) und dem äußeren Endanker (30) ist, wobei das Rückstellelement (40) ein erstes Rückstellmittel (41) und ein zweites Rückstellmittel (42) aufweist, wobei das erste Rückstellmittel (41) zwischen dem äußeren Endanker (30) und dem Zwischenanker (43) angeordnet ist, das zweite Rückstellmittel (42) zwischen dem inneren Endanker (20) und dem Zwischenanker (43) angeordnet ist, wobei ein Endanker mit einem ersten Verbindungsmittel fest verbunden ist, der Zwischenanker mit einem zweiten Verbindungsmittel fest verbunden ist, und ein anderer Endanker mit einem dritten Verbindungsmittel fest verbunden ist.

2. Dämpfer nach Anspruch 1,
**dadurch gekennzeichnet, dass** der äußere Endanker (30) mindestens teilweise das erste Rückstellmittel (41) und den Zwischenanker (43) umgibt.

3. Dämpfer nach einem der Ansprüche 1 bis 2,
**dadurch gekennzeichnet, dass** der Zwischenanker (43) mindestens teilweise das zweite Rückstellmittel (42) und den inneren Endanker (20) umgibt.

4. Dämpfer nach einem der Ansprüche 1 bis 3,
**dadurch gekennzeichnet, dass** das erste Rückstellmittel (41) erste Steifigkeits- und Dämpfungseigenschaften aufweist, das zweite Rückstellmittel (42) zweite Steifigkeits- und Dämpfungseigenschaften aufweist, wobei die ersten Eigenschaften von den zweiten Eigenschaften verschieden sind.

5. Rotor (1) mit einer Nabe (2) und einer Mehrzahl von Rotorblättern (3, 4, 5, 6),
**dadurch gekennzeichnet, dass** er mindestens einen Dämpfer (10) nach einem der vorstehenden Ansprüche aufweist, wobei jeder Dämpfer (10) mit einem inneren Endanker (20) und einem äußeren Endanker (30), die rohrförmig und koaxial zueinander sind, versehen ist, wobei ein Rückstellelement (40) zwischen dem inneren Endanker (20) und dem äußeren Endanker (30) angeordnet ist, das Rückstellelement (40) einen Zwischenanker (43) aufweist, der koaxial zu dem inneren Endanker (20) und dem äußeren Endanker (30) ist, das Rückstellelement (40) ein erstes Rückstellmittel (41) und ein zweites Rückstellmittel (42) aufweist, wobei das erste Rückstellmittel (41) zwischen dem äußeren Endanker (30) und dem Zwischenanker (43) angeordnet ist, das zweite Rückstellmittel (42) zwischen dem inneren Endanker (20) und dem Zwischenanker (43) angeordnet ist, wobei entweder der äußere Endanker, der innere Endanker oder der Zwischenanker mit der Nabe verbunden ist, ein anderer des inneren Endankers, des äußeren Endankers und des Zwischenankers mit einem ersten Rotorblatt verbunden ist, ein anderer des inneren Endankers, des äußeren Endankers und des Zwischenankers mit einem zweiten, zu dem ersten Rotorblatt benachbarten Rotorblatt verbunden ist.

6. Rotor nach Anspruch 5,
**dadurch gekennzeichnet, dass** ein Endanker (20, 30) eines Dämpfers (10) mit der Nabe (2) fest verbunden ist, und der andere Endanker (30, 20) mit einem ersten Rotorblatt (3) verbunden ist, wobei der Zwischenanker mit einem zweiten (4) zu dem ersten Rotorblatt (3) benachbarten Rotorblatt verbunden ist.

7. Rotor nach Anspruch 6,
**dadurch gekennzeichnet, dass** der äußere Endanker (30) eines Dämpfers mit der Nabe (2) fest verbunden ist, und der innere Endanker (20) mit dem ersten Rotorblatt (3) verbunden ist.

8. Rotor nach Anspruch 5,
**dadurch gekennzeichnet, dass** ein Endanker (20, 30) eines Dämpfers mit einem ersten Rotorblatt (3) fest verbunden ist, und der andere Endanker mit einem zweiten zu dem ersten Rotorblatt (3) benachbarten Rotorblatt (4) verbunden ist, und der Zwischenanker (43) mit der Nabe (2) verbunden ist.

9. Rotor nach Anspruch 5,
**dadurch gekennzeichnet, dass** ein Endanker (30) eines Dämpfers mit einem ersten Rotorblatt (3) fest verbunden ist, der andere Endanker (20) mit der Nabe (2) verbunden ist, und der Zwischenanker (43) mit einem zu dem ersten Rotorblatt (3) benachbarten zweiten Rotorblatt (4) verbunden ist.

10. Rotor nach Anspruch 5,
**dadurch gekennzeichnet, dass** ein Endanker (20) eines Dämpfers (10) mit einem ersten Rotorblatt fest verbunden ist, der andere Endanker (30) mit einem zweiten Rotorblatt (4), das zu dem ersten Rotorblatt (3) benachbart ist, verbunden ist, und der Zwischenanker (43) mit der Nabe (2) verbunden ist.

11. Rotor nach Anspruch 5,
**dadurch gekennzeichnet, dass** ein Zwischenanker (43) eines Dämpfers (10) mit einem ersten Rotorblatt (3) fest verbunden ist, ein Endanker (20) mit der Nabe (2) verbunden ist, und der andere Endanker (30) mit einem zweiten Rotorblatt (4) verbunden ist, das zu dem ersten Rotorblatt (3) benachbart ist.

## Claims

1. A damper (10) for a blade of the rotary wing of a rotorcraft provided with an inner end reinforcement member (20) and an outer end reinforcement member (30) which are tubular and coaxial, a return member (40) being arranged between the inner end reinforcement member (20) and the outer end reinforcement member (30),
**characterised in that** said return member (40) comprises an intermediate reinforcement member (43) coaxial with the inner end reinforcement member (20) and with the outer end reinforcement member (30), said return member (40) having a first return means (41) and a second return means (42), said first return means (41) being arranged between the outer end reinforcement member (30) and said intermediate reinforcement member (43), said second return means (42) being arranged between the inner end reinforcement member (20) and said intermediate reinforcement member (43), an end reinforcement member being integral with a first linking means, said intermediate reinforcement member being integral with a second linking means, another end reinforcement member being integral with a third linking means.

2. A damper according to Claim 1,
**characterised in that** the outer end reinforcement member (30) at least in part surrounds said first return means (41) and said intermediate reinforcement member (43).

3. A damper according to any one of Claims 1 to 2,
**characterised in that** the intermediate reinforcement member (43) at least in part surrounds said second return means (42) and said inner end reinforcement member (20).

4. A damper according to any one of Claims 1 to 3,
**characterised in that**, the first return means (41) having first stiffness and damping characteristics, the second return means (42) having second stiffness and damping characteristics, the first characteristics differ from the second characteristics.

5. A rotor (1) provided with a hub (2) and a plurality of blades (3, 4, 5, 6),
**characterised in that** it comprises at least one damper (10) according to any one of the preceding claims, each damper (10) being provided with an inner end reinforcement member (20) and an outer end reinforcement member (30) which are tubular and coaxial, a return member (40) being arranged between the inner end reinforcement member (20) and the outer end reinforcement member (30), said return member (40) comprising an intermediate reinforcement member (43) coaxial with the inner end reinforcement member (20) and with the outer end reinforcement member (30), said return member (40) having a first return means (41) and a second return means (42), said first return means (41) being arranged between the outer end reinforcement member (30) and said intermediate reinforcement member (43), said second return means (42) being arranged between the inner end reinforcement member (20) and said intermediate reinforcement member (43), one of said inner end, outer end and intermediate reinforcement members being connected to the hub, another of said inner end, outer end and intermediate reinforcement members being connected to a first blade, another of said inner end, outer end and intermediate reinforcement members being connected to a second blade adjacent to said first blade.

6. A rotor according to Claim 5,
**characterised in that**, an end reinforcement member (20, 30) of a damper (10) being secured to said hub (2), the other end reinforcement member (30, 20) is connected to a first blade (3), the intermediate reinforcement member (43) being connected to a second blade (4) adjacent to said first blade (3).

7. A rotor according to Claim 6,
**characterised in that** said outer end reinforcement member (30) of a damper is secured to said hub (2), the inner end reinforcement member (20) being connected to said first blade (3).

8. A rotor according to Claim 5,
**characterised in that**, an end reinforcement member (20, 30) of a damper being secured to a first blade (3), the other end reinforcement member is connected to a second blade (4) adjacent to said first blade (3), the intermediate reinforcement member (43) being connected to said hub (2).

9. A rotor according to Claim 5,
**characterised in that** an end reinforcement member (30) of a damper being secured to a first blade (3), the other end reinforcement member (20) is connected to said hub (2), the intermediate reinforcement member (43) being connected to a second blade (4) adjacent to said first blade (3).

10. A rotor according to Claim 5,
**characterised in that**, one end reinforcement member (20) of a damper (10) being secured to a first blade (3), the other end reinforcement member (30) is connected to a second blade (4) adjacent to said first blade (3), the intermediate reinforcement member (43) being connected to said hub (2).

11. A rotor according to Claim 5,
**characterised in that**, an intermediate reinforcement member (43) of a damper (10) being secured to a first blade (3), one end reinforcement member (20) is connected to said hub (2), the other end reinforcement member (30) being connected to a second blade (4) adjacent to said first blade (3).
